# EUROPEAN PATENT APPLICATION

(11) **EP 3 184 572 A1**
(43) Date of publication of application: **28.06.2017**
(21) Application number: 15833687.5
(22) Date of filing: 22.05.2015
(51) Int. Cl.: C08G 63/18, C08G 63/66

(54) **TRANSPARENT BIODEGRADABLE POLYMER**

(30) Priority: 21.08.2014 KR 20140109034
(71) Applicant: LOTTE Fine Chemical Co., Ltd., Ulsan, 44714 (KR)
(72) Inventor: AHN, Ji Soo, Daejeon 305-744 (KR); KANG, Sang Mi, Daejeon 302-829 (KR); KIM, Min Kyoung, Seoul 158-755 (KR); YUN, Ki Chull, Suwon-si Gyeonggi-do 443-817 (KR); KANG, Gyung Don, Daejeon 305-768 (KR); KIM, Ye Jin, Seoul 130-100 (KR); YANG, Mi Hwa, Miryang-si Gyeongsangnam-do 627-805 (KR)
(74) Representative: Kador & Partner
(86) International application number: PCT/KR2015/005148
(87) International publication number: WO 2016/027963

(57) **Abstract**

The present invention is characterized by introducing isosorbide to a monomer configuration for securing the transparency of a biodegradable polymer as well as providing material having excellent heat resistance and flexibility. As a monomer, a component derived from isosorbide which has a rigid structure is contained by 10-50 mol% of a total diol component, thereby bringing a heat resistance enhancing effect, and enhancing transparency by interfering with crystal formation, and allowing for providing a polymer having excellent flexibility. Thus, the present invention may enable securing stability in usage especially in the packaging area, and enable the heightening of the range of usage and utilization thereof.

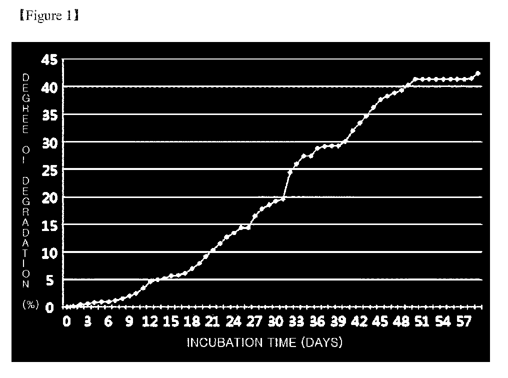

## Description

### [Technical Field]

The present invention relates to a polymer having improved transparency, heat resistance and flexibility by introducing isosorbide into a structure of an aliphatic/aromatic copolyester resin, as a transparent biodegradable polymer.

### [Background Art]

A great deal of research on an aliphatic/aromatic copolyester resin as a biodegradable polymer has recently been conducted (US Patent No. 4094721 (June 13, 1978), US Patent No. 4966959 (Oct. 30, 1996) and a number of others). They disclosed that the melting point and intrinsic viscosity of an aliphatic/aromatic copolyester resin vary according to the composition range and composition of components such as an aliphatic acid component, an aromatic acid component or the like capable of exhibiting biodegradability. In addition, various methods for enhancing physical properties such as improving an adhesive property and a molecular weight, shortening a reaction time or the like has been suggested.

However, since biodegradable polymers such as polybutylene succinate (PBS), polybutylene adipate-co-terephthalate (PBAT) or the like, which are used as representative aliphatic/aromatic copolyester resins, have opaque properties, the application thereof in a packaging field requiring transparent properties has been limited.

Further, polylactic acid (PLA) which has been used as an existing transparent biodegradable polymer has a problem in that heat resistance is low due to a low glass transition temperature (Tg) of nearly 60°C, and there are many restrictions on the use thereof owing to a brittle property. Lactic acid with a short molecular structure, which is a monomer constituting PLA, causes the structure of PLA to have high rigidity, and a methyl group further acts to impart brittleness to PLA.

Consequently, various attempts have been made by the present inventors to secure transparency of a biodegradable polymer while improving its poor physical properties, particularly, heat resistance and flexibility, thereby completing the present invention.

### [Disclosure]

### [Technical Problem]

It is an objective of the present invention to provide a polymer with enhanced heat resistance and flexibility as a transparent biodegradable polymer.

Specifically, the present invention suggests a method of using isosorbide as a means of controlling physical properties of a biodegradable polyester resin. Therefore, it is an objective of the present invention to provide a biodegradable polymer with improved transparency, heat resistance and flexibility and a product prepared therefrom.

### [Technical Solution]

The present invention provides a biodegradable polymer, which includes a component derived from isosorbide at 10 to 50 mol% and a component derived from an aliphatic diol which has a backbone consisting of 2 to 5 carbon atoms at 50 to 90 mol% based on total diol components; and includes a component derived from an aromatic dicarboxylic acid at 50 to 70 mol% and a component derived from an aliphatic dicarboxylic acid with 2 to 6 carbon atoms at 30 to 50 mol% based on total dicarboxylic acid components.

Preferably, the aliphatic diol which has a backbone consisting of 2 to 5 carbon atoms is at least one selected from the group consisting of ethylene glycol, 1,2-propanediol, 1,3-propanediol, 1,4-butanediol, 2,3-butanediol, 2-methyl-2,3-butanediol, 2,3-dimethyl-2,3-butanediol, 1,5-pentanediol and 4- methyl-2,3-pentanediol.

Preferably, the aromatic dicarboxylic acid is at least one selected from the group consisting of dimethyl terephthalate, terephthalic acid, isophthalic acid, naphthoic acid, naphthalenedicarboxylic acid and derivatives thereof.

Preferably, the aliphatic dicarboxylic acid is at least one selected from the group consisting of succinic acid, glutaric acid, adipic acid, maleic acid, malonic acid, oxalic acid and derivatives thereof.

Preferably, the aliphatic dicarboxylic acid is adipic acid, and the component derived from isosorbide is included at 20 to 50 mol% based on the total diol components.

Preferably, the polymer has a molecular weight (Mw) in a range of 50,000 to 150,000.

Preferably, the polymer has a glass transition temperature (Tg) in a range of 60 to 150 °C.

Preferably, the polymer has a flexural strength in a range of 1.0 to 3.0 MPa as a result of an ASTM flexibility test.

Preferably, the polymer has a light transmittance in a range of 82 to 99 at 660 nm.

The present invention provides a biodegradable product prepared from the polymer.

### [Advantageous Effects]

According to the present invention, the transparency, heat resistance and flexibility of the biodegradable polymer can be improved or controlled according to requirement. Particularly, since a material with enhanced heat resistance and flexibility as compared to the existing transparent biodegradable polymer can be provided, stability in usage of the biodegradable polymer in the packaging field can be increased and the range of usage and utilization thereof can be heightened.

### [Description of Drawings]

FIG. 1 is a result of measuring the degree of biodegradation of a polymer of Example 2.

### [Modes of the Invention]

The present invention relates to a technique for introducing isosorbide in the polymerization process of an aliphatic/aromatic copolyester resin as a means of improving the transparency, heat resistance and flexibility of a transparent biodegradable polymer or controlling them according to requirement.

Hereinafter, a biodegradable polymer of the present invention may be described as a 'biodegradable polyester resin' or an 'aliphatic/aromatic copolyester resin'.

Specifically, the present invention provides a biodegradable polymer in the form of an aliphatic/aromatic copolyester resin, which includes a component derived from isosorbide at 10 to 50 mol% and a component derived from an aliphatic diol which has a backbone consisting of 2 to 5 carbon atoms at 50 to 90 mol% based on total diol components; and includes a component derived from an aromatic dicarboxylic acid at 50 to 70 mol% and a component derived from an aliphatic dicarboxylic acid with 2 to 6 carbon atoms at 30 to 50 mol% based on total dicarboxylic acid components.

The structure of isosorbide used as a monomer in the polymerization process of the present invention is as follows.

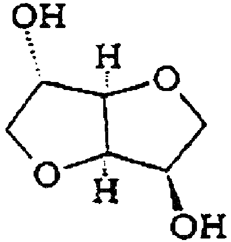

Isosorbide is a monomer with a rigid structure, and introduced into a monomer configuration of an aliphatic/aromatic copolyester resin to raise a glass transition temperature (Tg) of a polymer, thereby improving heat resistance. Thus, a polymer with heat resistance which is equivalent to or preferably higher than that of PLA which is well-known as a transparent biodegradable polymer can be provided.

The aliphatic/aromatic copolyester resin suggested in the present invention is copolymerized from an aliphatic diol having a backbone consisting of 2 to 5 carbon atoms, an aromatic carboxylic acid and an aliphatic dicarboxylic acid with 2 to 6 carbon atoms. When isosorbide is contained for the reason as described above, a glass transition temperature (Tg) is raised. In addition, the introduction of isosorbide leads to inhibition of crystal formation in a polymer structure such that crystallinity is reduced and an amorphous region is increased, thereby providing the effect of improving transparency. Moreover, the effect of enhancing the flexibility of the polymer is also exhibited. As a result, the biodegradable polymer of the present invention including isosorbide has improved transparency, heat resistance and flexibility. Furthermore, control of the content of isosorbide may be a means of adjusting the aforementioned properties of the polymer.

The biodegradable polymer of the present invention preferably includes a component derived from isosorbide in a range of 10 to 50 mol% based on the total diol components. The range indicates the upper limit and lower limit values of the component derived from isosorbide which may be included for the effect of improving physical properties. Therefore, the content out of the range is unable to contribute to the improvement of physical properties of the polymer, and particularly, an excess amount of the component derived from isosorbide leads to undesirable results such as causing a reaction time to be prolonged to decrease productivity, and lowering flexibility despite an increase in heat resistance in terms of physical properties.

Next, specific examples of the aliphatic diol which has a backbone consisting of 2 to 5 carbon atoms includes ethylene glycol, 1,2-propanediol, 1,3-propanediol, 1,4-butanediol, 2,3-butanediol, 2-methyl-2,3-butanediol, 2,3-dimethyl-2,3-butanediol, 1,5-pentanediol, 4- methyl-2,3-pentanediol, etc. Derived components thereof are included as a diol component of a polymer as well as isosorbide, and preferably accounts for 50 to 90 mol% of the total diol components.

Next, a specific example of the aromatic dicarboxylic acid includes a compound of at least one selected from the group consisting of dimethyl terephthalate, terephthalic acid, isophthalic acid, naphthoic acid, naphthalenedicarboxylic acid and derivatives thereof. Derived components thereof are preferably included at 50 to 70 mol% based on the total dicarboxylic acid components, and particularly, in the case of dimethyl terephthalate, the content of dimethyl terephthalate largely affects a glass transition temperature of a synthesized polymer. Accordingly, as will be shown in later examples, the higher the content of a component derived from dimethyl terephthalate is, the higher the glass transition temperature is, and a glass transition temperature is further increased as isosorbide is included, and thereby the final glass transition temperature of the polymer is determined. Consequently, control of the composition ratio of dimethyl terephthalate and isosorbide may be a means of adjusting the glass transition temperature of the biodegradable polymer of the present invention.

Furthermore, an aliphatic dicarboxylic acid with 2 to 6 carbon atoms is used as another dicarboxylic acid component. For example, oxalic acid, malonic acid, maleic acid, succinic acid, glutaric acid and adipic acid or derivatives thereof may be used, and among them, succinic acid and adipic acid may be preferably used in particular.

When succinic acid is compared with adipic acid as monomers, it is confirmed that succinic acid with a short molecular structure exhibits a slightly higher glass transition temperature, on the other hand, adipic acid with a relatively long molecular structure exhibits a glass transition temperature that is slightly lower while the flexibility of the polymer is improved. Accordingly, it is preferable to define the type of the aliphatic dicarboxylic acid to be included in the polymer, that is, the length of the molecular structure of the aliphatic dicarboxylic acid as a means of controlling the heat resistance and flexibility of the polymer.

The present invention suggests that the biodegradable polymer preferably has a glass transition temperature of more than 60 °C. Accordingly, as an example, the present invention proposes that when adipic acid is used, a component derived from isosorbide is preferably included at 20 mol% or more based on the total diol components in terms of a glass transition temperature. Further, it is determined that the biodegradable polymer of the present invention has a glass transition temperature of 150 °C or less, but it is just for the purpose of suggesting the preferable upper limit value, and thus it should be understood as being included in the range of the present invention as long as a polymer has a composition in the aforementioned range.

The flexibility of the biodegradable polymer of the present invention may be evaluated by measuring a flexural strength as shown in the following examples and comparative examples. The polymer of the present invention to which isosorbide is introduced has more excellent flexibility than that of PLA which is an existing biodegradable polymer, and particularly, in terms of the effect of improving flexibility, when adipic acid is used, the much more excellent effect of enhancing flexibility can be obtained.

The biodegradable polymer of the present invention is determined to have a flexural strength in the range of 1.0 to 3.0 MPa as a result of an ASTM flexibility test (ASTM 790). When the flexural strength is 3.0 MPa or more, the flexibility is insufficient as compared to that of a conventional biodegradable resin, and when the flexural strength is 1.0 MPa or less, it may be unsuitable because it is difficult for a product prepared by processing a resin to have form stability for withstanding external pressure.

Furthermore, with respect to the transparency described as an improved property of the polymer in the present invention, a light transmittance is measured to be 82 or more and 99 or less at 660 nm. However, since it is proposed just for specifically showing a transparency property of the polymer of the present invention, it should be understood as being included in the range of the present invention as long as a polymer has a composition in the aforementioned range.

The polymer of the present invention is preferably prepared to have a molecular weight (Mw) in the range of 50,000 to 150,000. This is because it is a size of a polymer that can be suitably used in the typical manufacturing process of sheets, films and various injection molded articles expected as the applications of the biodegradable polymer.

Accordingly, the present invention provides products such as sheets, films and various injection molded articles prepared from the transparent biodegradable polymer.

Next, a method of preparing the biodegradable polymer of the present invention will be described.

The biodegradable polyester resin of the present invention may be prepared by an esterification reaction and condensation polymerization of a diol including the isosorbide and the aliphatic diol which has a backbone consisting of 2 to 5 carbon atoms, and a dicarboxylic acid including the aromatic dicarboxylic acid and the aliphatic dicarboxylic acid.

As an example, a biodegradable polyester resin may be prepared by preparing an oligomer with an ester bond by the esterification reaction of a diol including isosorbide and ethylene glycol, and a dicarboxylic acid including dimethyl terephthalate and at least one of succinic acid and adipic acid, and then performing condensation polymerization of the oligomer.

In the esterification reaction, the total use amount of the diol including the isosorbide and the aliphatic diol which has a backbone consisting of 2 to 5 carbon atoms may be 1.0 to 2.0 parts by mole with respect to 1 part by mole of the total use amount of the dicarboxylic acid including an aromatic dicarboxylic acid and an aliphatic dicarboxylic acid. For example, 2.0 moles of the diol may be used with respect to 1 mole of the dicarboxylic acid.

When the use amount of the diol is within the range, not only the dicarboxylic acid reacts completely but also depolymerization in which an ester bond is destroyed by acidolysis due to a remaining dicarboxylic acid is not likely to occur. Further, the problem of rising costs due to excessive use of the diol is also avoided.

Each of the use amount of the aromatic dicarboxylic acid and the aliphatic dicarboxylic acid may be respectively 0.5 to 0.7 moles and 0.3 to 0.5 moles with respect to 1 mole of the total amount of the dicarboxylic acid. This is substantially consistent with a preferable composition of the component derived from an aromatic dicarboxylic acid and the component derived from an aliphatic dicarboxylic acid in the polymer as described above.

Further, each of the use amount of the isosorbide and the aliphatic diol which has a backbone consisting of 2 to 5 carbon atoms may be respectively 0.1 to 0.6 moles and 0.4 to 0.9 moles with respect to 1 mole of the total amount of the diol, and this is a feeding ratio in the synthesis process of the polymer. This is because, isosorbide has low reactivity, and thus not all of the supplied amount is included in the polymer and a part thereof is discharged to the outside under the high temperature and high vacuum conditions in the reaction process, and thus, an excess amount of isosorbide should be included in order to allow a component derived from isosorbide and a component derived from the aliphatic diol which has a backbone consisting of 2 to 5 carbon atoms to have the aforementioned composition.

Such an esterification reaction may be conducted at a temperature in the range of 170 to 210 °C for 120 to 200 minutes.

An end point of the esterification reaction may be determined by measuring the amount of water or an alcohol produced as a by-product in this reaction. For example, when 0.5 mol of isosorbide and 1.5 mol of ethylene glycol are used as the diol, and 0.7 mol of dimethyl terephthalate and 0.3 mol of succinic acid are used as the dicarboxylic acid, the esterification may be ended at a time when more than 95% of 1.4 mol (i.e., 1.33 mol) of methanol and 95% of 0.6 mol (i.e, 0.57 mol) of water, which are supposed to be generated as byproducts when it is assumed that all the used dimethyl terephthalate and succinic acid react with ethylene glycol and isosorbide, are produced as byproducts.

In the esterification reaction, to increase the reaction rate by shifting the chemical equilibrium, the produced alcohol, water, and/or an unreacted diol compound may be discharged out of the reaction system by evaporation or distillation.

To promote the esterification reaction, the esterification reaction may be conducted under the presence of a catalyst, a thermal stabilizer, and/or a branching agent.

Examples of the catalyst include magnesium acetate, tin (II) acetate, tetra-n-butyl titanate, lead acetate, sodium acetate, potassium acetate, antimony trioxide, N, N-dimethylaminopyridine, N-methylimidazole, or a combination thereof. The catalyst is generally added with a monomer at the same time when the monomer is added to a reactor. The use amount of the catalyst may be, for example, from 0.00001 to about 0.2 parts by mole with respect to 1 part by mole of the total use amount of the dicarboxylic acid. When the content of the catalyst is within the range, the reaction time may be reduced, and a desired degree of polymerization may be obtained.

The thermal stabilizer may be an organic or inorganic phosphorous compound. The organic or inorganic phosphorous compound may be, for example, phosphoric acid and an organic ester thereof, and phosphorous acid and an organic ester thereof. For example, the thermal stabilizer may be a commercially available substance including phosphoric acid, and an alkyl or aryl phosphate compound. For example, the thermal stabilizer may be triphenyl phosphate. When the catalyst and the thermal stabilizer are used together, the use amount of the thermal stabilizer may be, for example, in the range of 0.00001 to 0.2 parts by mole with respect to 1 part by mole of the total use amount of the dicarboxylic acid. When the use amount of the thermal stabilizer is within the range, deterioration and discoloration of the biodegradable polyester resin may be prevented.

The branching agent is used to control biodegradability or physical properties of a polyester resin. An example of the branching agent includes a compound having at least three groups enabling the formation of an ester or an amide, which are selected from the group consisting of a carboxylic group, a hydroxyl group, and an amine group. Specific examples of the branching agent include trimellitic acid, citric acid, malic acid, glycerol, a monosaccharide, a disaccharide, dextrin, or a reduced sugar. The use amount of the branching agent may be in the range of 0.00001 to 0.2 parts by mole with respect to 1 part by mole of the total use amount of the dicarboxylic acid.

The esterification reaction may be performed under normal pressure. The term "normal pressure" used herein refers to a pressure in the range of 760±10 Torr.

An oligomer having an ester bond is generated by the esterification reaction.

The product (i.e., oligomer) of the esterification reaction may further undergo condensation polymerization for polymerization. The condensation polymerization may be performed at a temperature in the range of 230 to 270 °C for 80 to 210 minutes.

The condensation polymerization may be performed under a pressure of 1 Torr or lower. As such, when the condensation polymerization is performed in a vacuum, an unreacted raw material (an unreacted monomer), a low-molecular weight oligomer, and water produced as a byproduct are removed to obtain a biodegradable polyester resin with a high molecular weight.

As necessary, a method known in a technical field of polymerization of a biodegradable copolyester resin to which the present invention belongs, such as a chain extension reaction using diisocyanate in an extruder, may be further performed after the condensation polymerization.

Hereinafter, the present invention will be described in further detail with reference to examples and comparative examples. The following examples are provided only for better understanding of the present invention, and, the present invention is not limited to the following examples.

### Example 1

### (Esterification reaction)

After 153.93 g (0.7 mol) of dimethyl terephthalate (DMT), 43.45 g (0.7 mol) of ethylene glycol (EG: first input), 69.70 g (0.3 mol) of isosorbide (IS), 0.2 g (0.00072 mol) of tetra-n-butyl titanate (TBT) as a catalyst, and 0.4 g (0.003 mol) of malic acid (MA) as a branching agent were loaded into a 500 ml 3-neck round bottom flask equipped with a condenser, a nitrogen inlet, and a stirrer to prepare a mixture, the mixture was heated to 200 °C and reacted with stirring in a nitrogen atmosphere until 95% or more of the theoretical amount of methanol (i.e., 53.75 ml) was discharged, and the methanol produced at this time was completely discharged out of this system through the condenser. After completion of the reaction, 35.43 g (0.3 mol) of succinic acid (SA), 18.62 g (0.3mol) of ethylene glycol (EG: second input), 0.05 g (0.00017 mol) of antimony trioxide (AT) as a catalyst and 1.0 g (0.003 mol) of triphenyl phosphate (TPP) as a stabilizer were additionally loaded into the 3-neck round bottom flask, and then reacted with stirring until 95% or more of the theoretical amount of water (i.e., 10.26 ml) was discharged, and the water produced at this time was discharged out of this system using the condenser.

### (Condensation polymerization)

Subsequently, the 3-neck round bottom flask was heated up to 250 °C under a vacuum of 1 Torr or less, and then the reaction was performed for about 120 minutes to prepare a biodegradable polymer.

### Examples 2 to 4

A biodegradable polymer was prepared by performing a reaction in the same manner as in Example 1 except that components derived from isosorbide, ethylene glycol, dimethyl terephthalate, and succinic acid included in the polymer have the compositions as presented in Table 1.

### Example 5

A biodegradable polymer was prepared by performing a reaction in the same manner as in Example 2 except that adipic acid was used instead of succinic acid.

### Comparative Example 1

As a comparative example, polylactic acid (PLA) (NatureWorks LLC, 2003D) which is a commercially available biodegradable polymer was used.

### Comparative Examples 2 and 3

A polymer having a composition without isosorbide as shown in Table 1 was prepared in the same manner as in Example 1.

**[Table 1]**

| | Example | | | | | Comparative Example | | |
|---|---|---|---|---|---|---|---|---|
| | 1 | 2 | 3 | 4 | 5 | 1 | 2 | 3 |
| IS | 13 | 21 | 43 | 21 | 21 | | | |
| EG | 87 | 79 | 57 | 79 | 79 | | 100 | 100 |
| DMT | 70 | 70 | 70 | 50 | 70 | | 70 | 70 |
| SA | 30 | 30 | 30 | 50 | | | 30 | |
| AA | | | | | 30 | | | 30 |
| Molecular weight (Mw) | 94,000 | 63,000 | 51,000 | 72,000 | 76,000 | 220,000 | 46,000 | 115,000 |
| Tg(°C) | 64 | 74 | 99 | 54 | 63 | 60 | 35 | 23 |
| Flexural strength (MPa) | 2.19 | 2.36 | 2.83 | 2.08 | 1.86 | 3.08 | - | - |

In the table, the composition of IS and EG is a content (mol%) occupied by components derived from IS and EG in the total diol components included in the biodegradable polymer; and the composition of DMT, SA and AA is a content (mol%) occupied by components derived from DMT, SA and AA in the total dicarboxylic acid components included in the biodegradable polymer.

### Evaluation method

### (1) Glass transition temperature

Measured using a DSC method
1st cycle: heating at a heating rate of 10 °C/min up to 200 °C
2nd cycle: cooling at a cooling rate of about 10 °C/min to -70 °C
3rd cycle: heating at a heating rate of 10 °C/min up to 200 °C

### (2) Flexural strength

ASTM flexibility test (ASTM 790)
Default sample type: 127×12.7×3.2 mm

Hereinafter, "components derived from IS, EG, DMT, SA and AA" included in the polymer is described as "IS, EG, DMT, SA and AA" for the convenience of description.

It can be seen from the results that when the content of DMT is increased, a glass transition temperature is raised (refer to Example 4 vs. Example 2), and when the content of IS is increased, a glass transition temperature is further increased (refer to Example 2 vs. Example 3). Particularly, when the content of DMT is 70 mol%, although IS is included at 13 mol%, a glass transition temperature is 64 °C (refer to Example 1) which is higher than that of the PLA of Comparative Example 1, and when IS is included at 43 mol% (refer to Example 3), a glass transition temperature is about 100 °C. Further, in the case where AA is included instead of SA as an aliphatic dicarboxylic acid, when IS is included at 21 mol%, a glass transition temperature is higher than that of PLA (refer to Example 5).

Next, in the case of the flexural strength, it can be determined that a value less than 3 was obtained in all of Examples 1 to 5, and thus flexibility is largely enhanced as compared to that of the PLA of Comparative Example 1. Particularly, it can be seen that the case where AA is included as an aliphatic dicarboxylic acid shows more improved flexibility as compared to that of the case where SA is included (refer to Example 2 vs. 5). Further, since polymers prepared without including IS according to Comparative Examples 2 and 3 have a very low Tg which was room temperature or less or close to room temperature, form stability at room temperature was low, and thus the measurement was impossible.

Next, some of the prepared polymers of examples were evaluated as shown below.

### Evaluation of transparency

The light transmittance of polymers according to Examples 2 and 5 was measured and compared with that of the existing biodegradable polymers such as PLA, polybutylene succinate (PBS), polybutylene adipate-co-terephthalate (PBAT), etc.

For an evaluation method, a film was prepared using a heat press method. Namely, the synthesized polymer was put into a rectangular frame with a height of about 400 µm and laid on a heat press device. Then, the polymer was heated up to about 200 °C to be melted, and a slight pressure was applied to prepare a film. A polyimide (PI) film was interposed between a metal plate of a heat press and the polymer composite considering that a polymer composite is viscous. The film thus obtained was rapidly cooled by immersing in water at about 10 °C, taken out of the frame and left at room temperature to perform an evaluation. The light transmittance of the film thus prepared was measured using a VIS-spectrometer device. The measurement was performed with light with a wavelength of 380 to 780 nm, that is, the whole visible region, and the degree of transparency was evaluated based on light transmittance at 660 nm. The results are presented in the following Table 2.

**[Table 2]**

| Sample | Comparative Example 1 | Example 2 | Example 5 | PBS | PBAT |
|---|---|---|---|---|---|
| Light transmittance (660 nm) | 88.89 | 82.36 | 83.89 | 43.06 | 58.66 |
| Evaluation | Transparent | Transparent | Transparent | Opaque | Opaque |

It can be seen from the results that the polymer of the present invention has a degree of transparency similar to that of PLA. On the other hand, the polymer of the present invention has a significant difference in light transmittance compared to PBS and PBAT which are opaque polymers.

### Evaluation of the degree of biodegradation

The degree of biodegradation of the polymer prepared in Example 2 was evaluated. The measurement method was carried out according to ISO 14855-1 (2005). Carbon dioxide produced by the decomposition of the sample was measured using a gas chromatograph (YL 6100 GC, manufactured by Young Lin Science). The test on all the samples including cellulose as a blank and reference biodegradable polymer was repeated in three vessels to reduce measurement error. The result is shown in FIG. 1.

The result shows that about 43% of the polymer prepared in Example 2 is degraded during 60 days, and thereby biodegradability is confirmed.

## Claims

1. A biodegradable polymer, comprising:
a component derived from isosorbide at 10 to 50 mol% and a component derived from an aliphatic diol, which has a backbone consisting of 2 to 5 carbon atoms, at 50 to 90 mol% based on total diol components; and
a component derived from an aromatic dicarboxylic acid at 50 to 70 mol% and a component derived from an aliphatic dicarboxylic acid with 2 to 6 carbon atoms at 30 to 50 mol% based on total dicarboxylic acid components.

2. The biodegradable polymer of claim 1, wherein the aliphatic diol which has a backbone consisting of 2 to 5 carbon atoms is at least one selected from the group consisting of ethylene glycol, 1,2-propanediol, 1,3-propanediol, 1,4-butanediol, 2,3-butanediol, 2-methyl-2,3-butanediol, 2,3-dimethyl-2,3-butanediol, 1,5-pentanediol and 4- methyl-2,3-pentanediol.

3. The biodegradable polymer of claim 1, wherein the aromatic dicarboxylic acid is at least one selected from the group consisting of dimethyl terephthalate, terephthalic acid, isophthalic acid, naphthoic acid, naphthalenedicarboxylic acid and derivatives thereof.

4. The biodegradable polymer of claim 1, wherein the aliphatic dicarboxylic acid is at least one selected from the group consisting of succinic acid, glutaric acid, adipic acid, maleic acid, malonic acid, oxalic acid and derivatives thereof.

5. The biodegradable polymer of claim 1, wherein the aliphatic dicarboxylic acid is adipic acid, and the component derived from isosorbide is included at 20 to 50 mol% based on the total diol components.

6. The biodegradable polymer of claim 1, wherein the polymer has a molecular weight (Mw) in a range of 50,000 to 150,000.

7. The biodegradable polymer of claim 1, wherein the polymer has a glass transition temperature (Tg) in a range of 60 to 150 °C.

8. The biodegradable polymer of claim 1, wherein the polymer has a flexural strength in a range of 1.0 to 3.0 MPa as a result of an ASTM flexibility test.

9. The biodegradable polymer of claim 1, wherein the polymer has a light transmittance in a range of 82 to 99 at 660 nm.

10. A biodegradable product, prepared from the polymer of any one of claims 1 to 9.
